# EUROPÄISCHE PATENTSCHRIFT

(11) **EP 1 458 801 B1**
(45) Veröffentlichungstag und Bekanntmachung des Hinweises auf die Patenterteilung: **02.11.2005**
(21) Anmeldenummer: 02726248.4
(22) Anmeldetag: 02.05.2002
(51) Int. Cl.: C08K 5/01, C08K 5/3417, C04B 24/26

(54) **DISPERSIONSPULVER ENTHALTEND OPTISCHE AUFHELLER, VERFAHREN ZU DEREN HERSTELLUNG SOWIE DEREN VERWENDUNG**
DISPERSION POWDER CONTAINING OPTICAL BRIGHTENERS, METHOD FOR THE PRODUCTION AND THE UTILIZATION THEREOF
POUDRE DE DISPERSION CONTENANT UN AZURANT OPTIQUE, SES PROCEDES DE PRODUCTION ET SON UTILISATION

(30) Priorität: 05.05.2001 DE 10121886
(43) Veröffentlichungstag der Anmeldung: 22.09.2004
(73) Patentinhaber: Celanese Emulsions GmbH, 61476 Kronberg/Ts. (DE)
(72) Erfinder: FIEDLER, Wolfgang, 65817 Eppstein (DE); SCHMITZ, Ludwig, 68642 Bürstadt (DE)
(74) Vertreter: Ackermann, Joachim
(86) Internationale Anmeldenummer: PCT/EP2002/004785
(87) Internationale Veröffentlichungsnummer: WO 2002/090429

(56) Entgegenhaltungen:
- EP-A- 0 699 542
- US-A- 5 205 963
- US-A- 5 763 508
- DATABASE WPI Section Ch, Week 199143 Derwent Publications Ltd., London, GB; Class A14, AN 1991-315014 XP002211696 & JP 03 211053 A (MITSUBISHI KASEI VINYL KK), 13. September 1991 (1991-09-13)

## Beschreibung

Die vorliegende Erfindung betrifft Dispersionspulver, enthaltend optische Aufheller, um deren Weißgrad zu erhöhen, Verfahren zu deren Herstellung sowie deren Verwendung.

Polymere Bindemittel enthalten, bedingt durch den Polymerisationsprozess Verunreinigungen, die eine unerwünschte gelbliche Verfärbung des nach der Trocknung resultierenden Filmes hervorrufen. Weiterhin enthalten diese Bindemittel Zusatzstoffe, wie z.B. Entschäumer oder Konservierungsstoffe, die ebenfalls nach dem Trocknen eine gelbe Farbe des getrockneten Films hervorrufen.

Insbesondere Dispersionspulver besitzen, bedingt durch ihre Zusammensetzung, bestehend aus dem Polymerisat sowie Versprühhilfen und Antibackmittel, häufig eine intensive Gelbfärbung. Gleiches gilt für die durch Redispersion dieser Pulver resultierenden Filme. Diese Eigenfarbe ist jedoch in vielen Anwendungsgebieten dieser Produktklasse, z.B. als Zuschlagstoff zu Tapetenkleistem oder hydraulisch abbindenden Massen auf Basis Gips oder Weißzement, aus ästhetischen Gründen unerwünscht.

Aufgabe der vorliegenden Erfindung war es daher, Dispersionspulver zur Verfügung zu stellen, die sowohl in ihrer Darreichungsform als auch als aufgezogener Redispersionsfilm einen hohen Weißgrad aufweisen.

Gegenstand der vorliegenden Erfindung sind somit Dispersionspulver enthaltend
a) mindestens ein Emulsionspolymerisat aus der Gruppe der Vinylester-, Vinylester/Ethylen-, Vinylchlorid-, (Meth)acrylat-, Styrol/(Meth)acrylat-Homo-oder Copolymerisate,
b) 0 bis 35 Gew.-%, vorzugsweise 3 bis 30 Gew.-%, bezogen auf die Gesamtmasse des Polymerisats, mindestens einer Versprühhilfe,
c) 0,001 bis 3 Gew.-%, vorzugsweise 0,01 bis 1 Gew.-%, bezogen auf die Gesamtmasse des Polymerisats, mindestens eines wasserlöslichen oder wasserunlöslichen optischen Aufhellers und
d) 0 bis 25 Gew.-%, vorzugsweise 1 bis 15 Gew.-%, bezogen auf die Gesamtmasse des Polymerisats, mindestens eines Antibackmittels.

Bevorzugt sind Dispersionspulver enthaltend
a) ein Emulsionspolymerisat aus der Gruppe der Vinylester-, Vinylester/Ethylen-, Vinylchlorid-, (Meth)acrylat-, Styrol/(Meth)acrylat-Homo-oder Copolymerisate,
b) 0 bis 35 Gew.-%, vorzugsweise 3 bis 30 Gew.-%, bezogen auf die Gesamtmasse des Polymerisats, einer Versprühhilfe,
c) 0,001 bis 3 Gew.-%, vorzugsweise 0,01 bis 1 Gew.-%, bezogen auf die Gesamtmasse des Polymerisats, eines wasserlöslichen oder wasserunlöslichen optischen Aufhellers und
d) 0 bis 25 Gew.-%, vorzugsweise 1 bis 15 Gew.-%, bezogen auf die Gesamtmasse des Polymerisats, eines Antibackmittels.

Als Emulsionspolymerisate a) können alle bekannten Vinylester-, Vinylester/Ethylen-, Vinylchlorid-, (Meth)acrylat-, Styrol/(Meth)acrylat-Homo- oder Copolymerisate eingesetzt werden.

Bevorzugte Emulsionspolymerisate sind Vinylester-Polymerisate. Besonders bevorzugt sind dabei Vinylacetat-Homopolymere oder Copolymere des Vinylacetats mit Ethylen und/oder weiteren Vinylestern, wie z.B. Vinyipropionat, Vinylpivalat, Vinylester von ®Versatic-Säure 9,10,11 (Resolution, α,α,α-trialkyl-verzweigte Carbonsäuren, ®VeoVa9 bis 11), Vinylchlorid, Vinyl-2-ethylhexanoat und/oder Estern der Acrylsäure und/oder Methacrylsäure mit geradkettigen, verzweigten oder cyclischen Alkoholen mit 1 bis 22 Kohlenstoffatomen, vorzugsweise 1 bis 12 Kohlenstoffatomen.

Der Anteil an Emulsionspolymerisat im Dispersionspulver liegt vorzugsweise im Bereich von 40 bis 99 Gew.-%, besonders bevorzugt im Bereich von 60 bis 95 Gew.-% und insbesondere im Bereich von 70 bis 95 Gew.-%, jeweils bezogen auf die Gesamtmasse des Dispersionspulvers.

Die Polymerisate werden vorzugsweise bereits während der Herstellung durch Schutzkolloide und/oder Emulgatoren stabilisiert. Als Schutzkolloide werden vorzugsweise Stärkederivate und Polyvinylalkohole eingesetzt. Als Stärkederivate werden vorzugsweise hydrolytisch und/oder thermisch abgebaute Stärken, sogenannte Dextrine, eingesetzt. Die Polyvinylalkohole besitzen vorzugsweise einen Polymerisationsgrad von 200 bis 3500, besonders bevorzugt von 500 und 3000. Der Hydrolysegrad beträgt vorzugsweise 80 bis 98 Mol-%, und besonders bevorzugt 85 bis 95 Mol-%.

Als Versprühhilfe b) können neben den bereits genannten Schutzkolloiden, vorzugsweise Dextrine und Polyvinylalkohole, ebenfalls wasserlösliche Formaldehydkondensate eingesetzt werden. Als Formaldehydkondensate eignen sich zum Beispiel Naphthalinsulfonsäure-, Phenolsulfonsäure-Formaldehyd- und Melaminsulfonsäure-Derivate. Die verschiedenen Versprühhilfen können auch als Gemische den Emulsionspolymerisaten zugesetzt werden.

Die Gelbfärbung des Dispersionspulvers kann sowohl durch die zur Herstellung der entsprechenden Dispersionen eingesetzten Schutzkolloide als auch die Zugabe der Versprühhilfen erzeugt werden. Auch Abbauprodukte, die während der radikalischen Polymerisation entstehen, können die Gelbfärbung bewirken.

Prinzipiell können erfindungsgemäß als Gelbfärbungsverminderer in den Dispersionspulvern alle bekannten und handelsüblichen, optischen Aufheller verwendet werden.

Optische Aufheller sind bekanntlich organische Substanzen, die Systeme von konjugierten Doppelbindungen oder Mehrfachbindungen, in die auch Heteroatome einbezogen sein können, enthalten, und Fluoreszenzeigenschaften besitzen. Dabei absorbieren die Moleküle bei Belichtung nicht-sichtbares, ultraviolettes Licht (bis 380 nm) und emittieren sichtbares, blaues Licht (ca. 450 nm). Optische Aufheller werden überall dort verwendet, wo durch Absorption von kurzwelligem, sichtbaren Licht an oder in einem Substrat ein störender Gelbstich in der Farbe des Substrates verursacht wird. Die bläuliche Fluoreszenz-Emission des optischen Aufhellers sorgt dafür, dass der von dem Substrat absorbierte und im reflektierten Licht des gelblichen Substrates damit fehlende Blauanteil ergänzt wird, so dass sich ein strahlend weißes Material ergibt. Überdosierungen an optischem Aufheller können allerdings zu einem Blaustich des Materials führen.

Optische Aufheller werden insbesondere für Papier, für Textilien und in Waschmitteln verwendet.

Als optische Aufheller c) werden vorzugsweise Derivate von Stilben, Cumarin, 1,3-Diphenylpyrazolin, Naphthalsäureimid und Benzoxazol, insbesondere Stilben-und Benzoxazol-Derivate, verwendet. Eingesetzt werden können sowohl wasserlösliche als auch wasserunlösliche Derivate. Wasserunlösliche optische Aufheller werden häufig in Form wässriger Emulsionen eingesetzt. Entsprechende Produkte sind dem Fachmann bekannt. Um eine bessere Weißtönung zu ergeben, müssen wasserunlösliche, optische Aufheller bzw. deren Emulsionen zum Erzielen besserer Ergebnisse erhitzt werden, wobei die verwendeten Temperaturen zwischen 40 und 90°C, vorzugsweise zwischen 45 und 75°C, liegen. Wasserlösliche, optische Aufheller dagegen können bei Raumtemperatur direkt zur Dispersion hinzugegeben und vermischt werden.

Als Antibackmittel d) bevorzugt sind Aluminiumsilikate, Calcium- und Magnesiumcarbonate bzw. deren Gemische, Kieselsäuren oder Kombinationen von Dolomit bzw. Calcit und Talk. Die Antibackmittel besitzen vorzugsweise eine Teilchengröße von 0,001 bis 0,5 mm.

Das Dispersionspulver kann gegebenenfalls noch weitere Additive aus der Gruppe der Zementverflüssiger, wie z.B. Melaminformaldehydkondensate, Netzmittel, wie z.B. Alkylpolyglykole, Weichmacher, wie z.B. Dibutylphthalat, Dispersionsentschäumer, wie z.B. Polyethersiloxane, oder Konservierungsmittel, wie z.B. Isothiazolinole, enthalten.

Die Herstellung des Emulsionspolymerisates a) erfolgt nach allgemein bekannten Verfahren, vorzugsweise durch Emulsionspolymerisation der entsprechenden Monomeren mittels eines Radikalstarters.

Die Herstellung der erfindungsgemäßen Dispersionspulver erfolgt vorzugsweise durch Sprühtrocknung einer Dispersionsmischung enthaltend das Emulsionspolymerisat a), die Versprühhilfe b) und den optischen Aufheller c) in einem Sprühturm. Die Versprühung erfolgt vorzugsweise mit einer Zweistoffdüse oder einer Rotationsscheibe bei einer Temperatur des Trockengases zwischen 100 und 180°C. Zur Erhöhung der Lägerstabilität und der Rieselfähigkeit des Dispersionspulvers wird vorzugsweise ein Antibackmittel d) parallel zur Dispersion in den Sprühturm eingebracht, so dass es zu einer bevorzugten Ablagerung des Antibackmittels auf den Dispersionsteilchen kommt.

Erfindungsgemäß erhält man weiße, gut redispergierbare Dispersionspulver, die sich besonders für den Einsatz in Tapetenkleistem sowie in gips- und weißzementhaltigen Zusammensetzungen eignen.

Generell wird durch den Zusatz von Dispersionspulvem zu Tapetenkleister die Verarbeitung dieser Kleister erleichtert und die Klebkraft erhöht. Durch Zusatz zu Mörteln, Beton oder Gipsmassen wird die Biegezugfestigkeit, Druckfestigkeit und Haftzugfestigkeit des abgebundenen Baustoffs erhöht.

Die Erfindung wird im folgenden anhand von Ausführungsbeispielen näher beschrieben, ohne dadurch jedoch beschränkt zu werden. Die in den Beispielen angeführten Teile und Prozente beziehen sich auch das Gewicht und den jeweiligen Feststoffgehalt der eingesetzten Reagenzien, soweit nicht anders angegeben.

### Beispiele

### Dispersion 1

In einem 3 I Glaskolben, der sich in einem Heizbad befindet und mit Rührer, Rückflußkühler, Tropftrichter und Thermometer ausgestattet ist, werden 660 Teile vollentsalztes Wasser vorgelegt. Unter Rühren (130 Upm) werden

| | |
|---|---|
| 345 Teile | Gelbdextrin (®Tackidex DF165, Fa. Roquette) |
| 3 Teile | Natriumlaurylsulfat (®Texapon K12, Fa. Cognis) |
| 21 Teile | eines ethoxylierten Fettalkohols mit 20 EO-Gruppen (®Genapol O-200, Fa. Clariant) |
| 2 Teile | eines Entschäumers auf Basis einer Kombination von pflanzlichen Ölen, modifizierten Fettstoffen, nichtionogenen Emulgatoren und sehr wenig Silikonöl (®Agitan 301, Fa: Münzing-Chemie) |
| 5,5 Teile | Natriumacetat |

zugegeben und die Mischung auf eine Innentemperatur von 65°C aufgeheizt (Polymerisationsflotte). Femer werden eine Lösung (Initiatorlösung I) bestehend aus

| | |
|---|---|
| 13,8 Teilen | tert.-Butylhydroperoxid, 70%ig (®Trigonox A-W70, Fa. Akzo) in |
| 55 Teilen | vollentsalztem Wasser |

und eine Lösung (Initiatorlösung II) bestehend aus

| | |
|---|---|
| 6,9 Teilen | Natriumhydroxymethansulfinat (®Rongalit C, Fa. BASF) in |
| 73 Teilen | vollentsalztem Wasser |

hergestellt. Als Monomer werden 1380 Teile Vinylacetat bereitgestellt.

Zu der auf eine Innentemperatur von 65°C erwärmten Polymerisationsflotte werden 138 Teile Vinylacetat zugegeben. Sobald die Innentemperatur wieder 65°C erreicht hat, werden 7 Teile Initiatorlösung I und 8 Teile Initiatorlösung II zugesetzt und 15 Minuten vorpolymerisiert.
Anschließend wird die gesamte Menge Vinylacetat innerhalb von 4 Stunden, und parallel dazu die Initiatorlösungen I und II innerhalb von 5 Stunden bei 65°C zudosiert. Danach wird abgekühlt.
Die so hergestellte Dispersion besitzt einen Feststoffgehalt von 67,5% bei einer Viskosität von 920 mPas (nach Haake, bei D = 17,93 s⁻¹).

### Beispiel 1

Zu 500 g der Dispersion 1 werden 0,5 g ®Hostalux ETB-N (wässrige Emulsion von Benzoxazolyl-Styryl-Derivaten, Feststoffgehalt ca. 15 %, Hersteller: Fa. Clariant) zugegeben und eine Stunde bei 50°C gerührt. Dann wird durch Zugabe von Wasser eine Versprühviskosität von 400 mPas (nach Haake, bei D = 17,93 s⁻¹) eingestellt. Die Mischung wird mit Hilfe einer Zweistoffdüse versprüht. Während des Versprühens wird ein Antibackmittelgemisch, bestehend aus Talk und Dolomit, so zudosiert, dass der Anteil des Antibackmittels im Dispersionspulver 10 Gew.-% beträgt. Man erhält ein lagerstabiles, gut rieselfähiges Pulver.

### Beispiel 2

Es wird analog Beispiel 1 verfahren, jedoch wird eine Stunde bei 70°C erhitzt.

### Beispiel 3

Es wird analog Beispiel 2 verfahren, jedoch werden 1,0 g ®Hostalux ETB-N eingesetzt.

### Beispiel 4

Zu 500 g der Dispersion 1 werden 0,2 g ®Leukophor BLB (wässrige Lösung eines Stilben-Derivats, Feststoffgehalt ca. 20 %, Hersteller: Fa. Clariant) zugegeben und eine Stunde gerührt. Dann wird durch Zugabe von Wasser eine Versprühviskosität von 400 mPas (nach Haake, bei D = 17,93 s⁻¹) eingestellt. Die Mischung wird mit Hilfe einer Zweistoffdüse versprüht. Während des Versprühens wird ein Antibackmittelgemisch, bestehend aus Talk und Dolomit, so zudosiert, dass der Anteil des Antibackmittels im Dispersionspulver 10 Gew.-% beträgt. Man erhält ein lagerstabiles, gut rieselfähiges Pulver.

### Beispiel 5

Es wird analog Beispiel 4 verfahren, jedoch mit 0,4 g ®Leukophor BLB.

### Vergleichsbeispiel 1

Durch Zugabe von Wasser wird die oben beschriebene Dispersion 1 auf eine Versprühviskosität von 400 mPas (nach Haake, bei D = 17,93 s⁻¹) eingestellt und anschließend mit Hilfe einer Zweistoffdüse versprüht. Während des Versprühens wird ein Antibackmittelgemisch, bestehend aus Talk und Dolomit, so zudosiert, dass der Anteil des Antibackmittels im Dispersionspulver 10 Gew.-% beträgt. Man erhält ein lagerstabiles, gut rieselfähiges Pulver.

### Meßmethode

Die Bestimmung der Gelbfärbung wird in Anlehnung an DIN 6167 mit einem Farbmessgerät "Tricolor LFM 3" der Firma Dr. Lange & Co. durchgeführt. Dabei werden die zu prüfenden Dispersionspulver ohne weitere Vorbehandlung vermessen. Die resultierende Messgröße ist der "Yellowness Index (YI)", wobei folgende Einteilung zugrunde gelegt wird:

| | |
|---|---|
| YI-Wert: 0 - 10 | Weißes Produkt |
| YI-Wert: 10 - 30 | Gelbstichiges Produkt |
| YI-Wert: > 30 | Stark gelbes Produkt |

### Ergebnisse

Die Vermessung der oben genannten Dispersionspulver liefert folgende Ergebnisse:

| | Yellowness Index |
|---|---|
| Beispiel 1 | 6 |
| Beispiel 2 | 5 |
| Beispiel 3 | 2 |
| Beispiel 4 | 8 |
| Beispiel 5 | 6 |
| Vergleichsbeispiel 1 | 12 |

### Dispersion 2

Vinylacetat-VeoVa10-Butylacrylat-Dispersion mit einem Feststoffgehalt von 50 %, die mit Polyvinylalkohol stabilisiert ist und analog dem Beispiel 1 der EP-A-0 761 697 hergestellt ist.

### Beispiel 6

Zu 1000 g der Dispersion 2 werden 250 g einer 25 %igen Lösung eines Naphthalinsulfonsäure-Formaldehyd-Kondensates (®Atlox 4843 der Fa. ICI) sowie 2 g ®Hostalux ETB-N (wässrige Emulsion von Benzoxazolyl-styryl-derivaten, Feststoffgehalt ca. 15 %, Hersteller: Fa. Clariant) zugegeben und eine Stunde bei 70°C gerührt. Dann wird durch Zugabe von Wasser eine Versprühviskosität von 400 mPas (nach Haake, bei D = 17,93 s⁻¹) eingestellt. Die Mischung wird mit Hilfe einer Zweistoffdüse versprüht. Während des Versprühens wird ein Antibackmittelgemisch, bestehend aus Talk und Dolomit so zudosiert, dass der Anteil des Antibackmittels im Dispersionspulver 15 Gew.% beträgt. Man erhält ein lagerstabiles, gut rieselfähiges Pulver.

### Vergleichsbeispiel 2

Es wird analog Beispiel 6 verfahren, jedoch ohne Zugabe von ®Hostalux ETB-N.

### Meßmethode

Die Bestimmung der Gelbfärbung wird in Anlehnung an DIN 6167 mit einem Farbmessgerät "Microcolor 2" der Firma Dr. Lange & Co. durchgeführt. Dabei werden die zu prüfenden Dispersionspulver ohne weitere Vorbehandlung vermessen. Die resultierende Messgröße ist der "Yellowness Index (YI)", wobei folgende Einteilung zugrunde gelegt wird:

| | |
|---|---|
| YI-Wert: 0 - 3 | Weißes Produkt |
| YI-Wert: 4 - 7 | Gelbstichiges Produkt |
| YI-Wert: > 7 | Stark gelbes Produkt |

### Ergebnisse

Die Vermessung der oben genannten Dispersionspulver liefert folgende Ergebnisse:

| | Yellowness Index |
|---|---|
| Beispiel 6 | 3 |
| Vergleichsbeispiel 2 | 11 |

Wie die Beispiele zeigen, führt der Zusatz von optischen Aufhellern zu einer deutlichen Verringerung der Gelbfärbung der Dispersionspulver.

## Patentansprüche

1. Dispersionspulver enthaltend
a) mindestens ein Emulsionspolymerisat aus der Gruppe der Vinylester-, Vinylester/Ethylen-, Vinylchlorid-, (Meth)acrylat-, Styrol/Acrylat-Homo- oder Copolymerisate,
b) 0 bis 35 Gew.-%, bezogen auf die Gesamtmasse des Polymerisats, mindestens einer Versprühhilfe,
c) 0,001 bis 3 Gew.-%, bezogen auf die Gesamtmasse des Polymerisats, mindestens eines wasserlöslichen oder wasserunlöslichen optischen Aufhellers und
d) 0 bis 25 Gew.-%, bezogen auf die Gesamtmasse des Polymerisats, mindestens eines Antibackmittels.

2. Dispersionspulver gemäß Anspruch 1, **dadurch gekennzeichnet, dass** das Emulsionspolymerisat a) ein Vinylacetat-Copolymerisat ist.

3. Dispersionspulver gemäß Anspruch 1 oder 2, **dadurch gekennzeichnet, dass** das Emulsionspolymerisat a) mittels Schutzkolloiden und/oder Emulgatoren stabilisiert ist.

4. Dispersionspulver gemäß Anspruch 3, **dadurch gekennzeichnet, dass** als Schutzkolloid ein Stärkederivat aus der Gruppe der hydrolytisch und/oder thermisch abgebauten Stärken eingesetzt wird.

5. Dispersionspulver gemäß Anspruch 3, **dadurch gekennzeichnet, dass** als Schutzkolloid ein Polyvinylalkohol mit einem Polymerisationsgrad von 200 bis 3500 und einem Hydrolysegrad von 80 bis 98 Mol-% eingesetzt wird.

6. Dispersionspulver gemäß mindestens einem der vorhergehenden Ansprüche, **dadurch gekennzeichnet, dass** als Versprühhilfe b) Stärkederivate aus der Gruppe der hydrolytisch und/oder thermisch abgebauten Stärken, Polyvinylalkohole und/oder wasserlösliche Formaldehydkondensate eingesetzt werden.

7. Dispersionspulver gemäß mindestens einem der vorhergehenden Ansprüche, **dadurch gekennzeichnet, dass** als optische Aufheller c) Stilben-und/oder Benzoxazolderivate eingesetzt werden.

8. Dispersionspulver gemäß mindestens einem der vorhergehenden Ansprüche, **dadurch gekennzeichnet, dass** der optische Aufheller c) sowohl wasserlöslich als auch wasserunlöslich sein kann.

9. Dispersionspulver gemäß mindestens einem der vorhergehenden Ansprüche, **dadurch gekennzeichnet, dass** als Antibackmittel d) Aluminiumsilikate, Calcium- und Magnesiumcarbonate bzw. deren Gemische, Kieselsäuren und Kombinationen von Dolomit bzw. Calcit und Talk eingesetzt werden.

10. Verfahren zur Herstellung eines Dispersionspulver gemäß mindestens einem der vorhergehenden Ansprüche bei dem mindestens ein Emulsionspolymerisat a), das gegebenenfalls schutzkolloid und/oder emulgatorstabilisiert ist, mit gegebenenfalls mindestens einer Versprühhilfe b) und mindestens einem optischen Aufheller c) gemischt werden und anschließend die erhaltene Mischung, gegebenenfalls unter gleichzeitigem Zumischen mindestens eines Antibackmittels d), getrocknet wird.

11. Verfahren gemäß Anspruch 10, **dadurch gekennzeichnet, dass** die Mischung sprühgetrocknet wird.

12. Verwendung eines Dispersionspulvers gemäß mindestens einem der Ansprüche 1 bis 9 zur Modifizierung von Tapetenkleister, Mörtel oder Beton.

## Claims

1. A dispersion powder comprising
a) at least one emulsion polymer from the group consisting of vinyl ester, vinyl ester/ethylene, vinyl chloride, (meth)acrylate, and styrene/acrylate homopolymers and copolymers,
b) from 0 to 35% by weight based on the total mass of the polymer, of at least one spraying aid,
c) from 0.001 to 3% by weight based on the total mass of the polymer, of at least one water-soluble or water-insoluble optical brightener, and
d) from 0 to 25% by weight based on the total mass of the polymer, of at least one anticaking agent.

2. The dispersion powder as claimed in claim 1, **characterized in that** the emulsion polymer a) is a vinyl acetate copolymer.

3. The dispersion powder as claimed in claim 1 or 2, **characterized in that** the emulsion polymer a) is stabilized by means of protective colloids and/or emulsifiers.

4. The dispersion powder as claimed in claim 3, **characterized in that** a starch derivative from the group consisting of hydrolytically and/or thermally degraded starches is used as protective colloid.

5. The dispersion powder as claimed in claim 3, **characterized in that** a polyvinyl alcohol having a degree of polymerization of from 200 to 3500 and a degree of hydrolysis of from 80 to 98 mol% is used as protective colloid.

6. The dispersion powder as claimed in at least one of the preceding claims, **characterized in that** starch derivatives from the group consisting of hydrolytically and/or thermally degraded starches, polyvinyl alcohols and/or water-soluble formaldehyde condensates are used as spraying aid b).

7. The dispersion powder as claimed in at least one of the preceding claims, **characterized in that** stilbene derivatives and/or benzoxazole derivatives are used as optical brighteners c).

8. The dispersion powder as claimed in at least one of the preceding claims, **characterized in that** the optical brightener c) may be either water-soluble or else water-insoluble.

9. The dispersion powder as claimed in at least one of the preceding claims, **characterized in that** aluminum silicates, calcium carbonates and magnesium carbonates or mixtures thereof, silicas and combinations of dolomite and/or calcite and talc are used as anticaking agents d).

10. A process for preparing a dispersion powder as claimed in at least one of the preceding claims by mixing at least one emulsion polymer a), stabilized if desired by a protective colloid and/or emulsifier, with, if desired, at least one spraying aid b) and at least one optical brightener c) and then drying the resulting mixture, if desired with simultaneous admixing of at least one anticaking agent d).

11. The process as claimed in claim 10, **characterized in that** the mixture is spray-dried.

12. The use of a dispersion powder as claimed in at least one of claims 1 to 9 for modifying wallpaper paste, mortar or concrete.

## Revendications

1. Poudre de dispersion contenant
a) au moins un polymérisat en émulsion du groupe des homo- ou copolymérisats de vinylester, vinylester/ éthylène, chlorure de vinyle, (méth)acrylate, styrène/acrylate,
b) 0 à 35 % en poids, par rapport au poids total du polymérisat, d'au moins un adjuvant de pulvérisation,
c) 0,001 à 3 % en poids, par rapport au poids total du polymérisat, d'au moins un azurant optique soluble dans l'eau ou insoluble dans l'eau et
d) 0 à 25 % en poids, par rapport au poids total du polymérisat, d'au moins un agent anti-agglomération.

2. Poudre de dispersion selon la revendication 1, **caractérisée en ce que** le polymérisat en émulsion a) est un copolymérisat d'acétate de vinyle.

3. Poudre de dispersion selon la revendication 1 ou 2, **caractérisée en ce que** le polymérisat en émulsion a) est stabilisé au moyen de colloïdes protecteurs et/ou d'agents émulsifiants.

4. Poudre de dispersion selon la revendication 3, **caractérisée en ce que** l'on utilise comme colloïde protecteur un dérivé de l'amidon du groupe des amidons décomposés hydrolytiquement et/ou thermiquement.

5. Poudre de dispersion selon la revendication 3, **caractérisée en ce que** l'on utilise comme colloïde protecteur un alcool polyvinylique avec un degré de polymérisation de 200 à 3500 et un degré d'hydrolyse de 80 à 98 % en moles.

6. Poudre de dispersion selon au moins l'une des revendications précédentes, **caractérisée en ce que** l'on utilise comme adjuvant de pulvérisation b) des dérivés d'amidon du groupe des amidons décomposés hydrolytiquement et/ou thermiquement, des alcools polyvinyliques et/ou des condensats de formaldéhyde solubles dans l'eau.

7. Poudre de dispersion selon au moins l'une des revendications précédentes, **caractérisée en ce que** l'on utilise comme azurant optique c) des dérivés de stilbène et/ou de benzoxazole.

8. Poudre de dispersion selon au moins l'une des revendications précédentes, **caractérisée en ce que** l'azurant optique c) peut être non seulement soluble dans l'eau mais aussi insoluble dans l'eau.

9. Poudre de dispersion selon au moins l'une des revendications précédentes, **caractérisée en ce que** l'on utilise comme agent anti-agglomération d) des silicates d'aluminium, des carbonates de calcium et de magnésium ou leurs mélanges, des acides siliciques et des combinaisons de dolomite ou de calcite et de talc.

10. Procédé de préparation d'une poudre de dispersion selon au moins l'une des revendications précédentes dans lequel on mélange au moins un polymérisat en émulsion a) qui est éventuellement stabilisé par un colloïde protecteur et/ou agent émulsifiant, avec éventuellement au moins un adjuvant de pulvérisation b) et au moins un azurant optique c) et on sèche ensuite le mélange obtenu, éventuellement en mélangeant en même temps au moins un agent anti-agglomération d).

11. Procédé selon la revendication 10, **caractérisé en ce que** le mélange est séché par pulvérisation.

12. Utilisation d'une poudre de dispersion selon au moins l'une des revendications 1 à 9 pour la modification de colle à tapis, de mortier ou de béton.
